# EUROPEAN PATENT APPLICATION

(11) **EP 4 701 100 A1**
(43) Date of publication of application: **25.02.2026**
(21) Application number: 25196845.9
(22) Date of filing: 19.08.2025
(51) Int. Cl.: H04B 10/079, H04B 10/50, H04J 14/06

(54) **ASYMMETRICAL SCALING OF CO-PACKAGED OPTICS**

(30) Priority: 19.08.2024 US 202418808849; 04.11.2024 LU 103443; 12.08.2025 US 202519297013
(71) Applicant: Mellanox Technologies, Ltd., 2069200 Yokneam (IL)
(72) Inventor: LYSDAL, Henning, 2069200 Yokneam (IL); FRANCK, Thorkild, 2069200 Yokneam (IL)
(74) Representative: Mathys & Squire

(57) **Abstract**

Systems, optical assemblies, and methods are provided for transmitting optical signals. An example system includes a light source configured to generate a light beam. An optical module is operably coupled to the light source and configured to produce a plurality of optical signals using the light beam. The optical module comprises a plurality of transmitters, where a portion of the light beam is directed to a corresponding transmitter. An optical coupler is operably coupled to each of the plurality of transmitters via at least one transmitter optical fiber. The optical coupler is configured to split the portion of the light beam from each transmitter into a plurality of optical signals for transmission to a corresponding receiver via a plurality of receiver optical fibers. Each of the plurality of receiver optical fibers is independently routable, with the number of transmitter optical fibers less than the number of receiver optical fibers.

## Description

### TECHNOLOGICAL FIELD

Example embodiments of the present disclosure relate generally to optical signal transmission systems, assemblies, and methods.

### BACKGROUND

The transmission of optical signals has traditionally occurred in spatially constrained environments, in which the number of optical fibers and optical ports are significant design considerations. As a result of such constraints, the efficacy and efficiency of optical signal transmission systems may be partially dependent on the infrastructure, layout, and method in which signals are produced and processed. Applicant has identified numerous deficiencies and problems associated with transmission of optical signals. Through applied effort, ingenuity, and innovation, many of these identified problems have been solved by developing solutions that are included in embodiments of the present disclosure, many examples of which are described in detail herein.

### GENERAL DESCRIPTION

Embodiments of the present disclosure are directed to optical signal transmission systems, assemblies, and methods. The invention is defined by the claims. In order to illustrate the invention, aspects and embodiments which may or may not fall within the scope of the claims are described herein.
The optical assembly may be configured to transmit optical signals using an asymmetrical number of receiver optical fibers and transmitter optical fibers.
In some embodiments, an optical assembly, comprises an optical module including a plurality of transmitters; at least one transmitter optical fiber; an optical coupler operably coupled to the optical module via the at least one transmitter optical fiber; and preferably a plurality of optical output ports coupleable or connectable to corresponding receiver optical fibers. The optical module is preferably configured to receive a light beam, direct portions of the light beam to corresponding transmitters of the plurality of transmitters to produce a plurality of optical signals from the light beam, and further combine the plurality of optical signals into the at least one transmitter optical fiber. The optical coupler is preferably configured to split the combined optical signals into a plurality of optical signals based on wavelength, polarization, or wavelength-polarization combinations of each optical signal. The optical coupler may further be configured to route the plurality of optical signals to corresponding optical output ports for transmission to corresponding receivers via a plurality of receiver optical fibers. The number of transmitter optical fibers is less than the number of optical output ports. Alternatively, instead of routing the plurality of optical signals to corresponding optical output ports, the optical coupler may be configured to couple the plurality of optical signals into corresponding receiver optical fibers for transmission to corresponding receivers.
In some embodiments, the optical assembly may include an optical module with a plurality of transmitters and an optical coupler operably coupled to each of the plurality of transmitters via at least one transmitter optical fiber. The optical module may be configured to receive a light beam and produce a plurality of optical signals using the light beam. Portions of the light beam may be directed to a corresponding transmitter of the optical module. The optical coupler may be configured to split the portion of the light beam from each transmitter into a plurality of optical signals based on wavelength, polarization, or wavelength-polarization combinations of each optical signal for transmission to a corresponding receiver via a plurality of receiver optical fibers. Each of the plurality of receiver optical fibers may be independently routable from the optical coupler to the corresponding receiver. The number of transmitter optical fibers connecting the plurality of transmitters of the optical module to the optical coupler may be less than the number of receiver optical fibers connecting the optical coupler to the corresponding receivers.

In some embodiments, the optical module may further include a power splitter operably coupled to the plurality of transmitters. The power splitter may be configured to split the light beam into multiple portions such that each portion of the light beam from the power splitter is directed to the corresponding transmitter.

In some embodiments, a ratio of receiver optical fibers or optical output ports to transmitter optical fibers is 16:1.

In some embodiments, the optical coupler includes a demultiplexer (DMUX).

In some embodiments, the optical module is a co-packaged optics (CPO) module.

In some embodiments, the optical module further includes a sense line operably coupling a light source and the optical coupler. The sense line may be configured to detect characteristics of the portions of the light beam received at the optical coupler such that a configuration of the light source is adjusted based on the characteristics detected.

In some embodiments, the optical module further includes a sensor configured to detect characteristics of the portions of the light beam at the optical module and a sense line operably coupled to the sensor and a light source. The sense line may be configured to relay an indication of the detected characteristics to the light source such that a configuration of the light source is adjusted based on the detected characteristics.
In other embodiments, a system for transmitting optical signals is provided. The system comprises a light source configured to generate a light beam comprising a plurality of different wavelengths, polarizations, and/or wavelength-polarization combinations; and an optical assembly as described above, wherein the optical module of the optical assembly comprises, or is operably coupled to, the light source.

In other embodiments, a system for transmitting optical signals is provided. The system may include a light source, an optical module including a plurality of transmitters, and an optical coupler. The light source may be configured to generate a light beam including a plurality of wavelengths, a plurality of polarizations, or a plurality of wavelength-polarization combinations. The optical module may be operably coupled to the light source, and the optical module may be configured to produce a plurality of optical signals using the light beam. A portion of the light beam may be directed to a corresponding transmitter. The optical coupler may be operably coupled to each of the plurality of transmitters via at least one transmitter optical fiber. The optical coupler maybe configured to split the portion of the light beam from each transmitter into a plurality of optical signals based on wavelength, polarization, or wavelength-polarizations combinations of each optical signal for transmission to a corresponding receiver via a plurality of receiver optical fibers. Each of the plurality of receiver optical fibers may be independently routable from the optical coupler to the corresponding receiver. The number of transmitter optical fibers connecting the plurality of transmitters of the optical module to the optical coupler may be less than the number of receiver optical fibers connecting the optical coupler to the corresponding receivers.

In some embodiments, the optical module further includes a power splitter operably coupled to the plurality of transmitters. The power splitter may be configured to split the light beam into multiple portions such that each portion of the light beam from the power splitter is directed to the corresponding transmitter.

In some embodiments, the system further includes an optical circuit switch (OCS) operably coupled between the plurality of transmitters of the optical module and the optical coupler.

In some embodiments, the system further includes a sensor configured to detect characteristics of the portions of the light beam at the optical module and a sense line operably coupled to the sensor and the light source. The sense line may be configured to relay an indication of the detected characteristics to the light source such that a configuration of the light source is adjusted based on the detected characteristics.

In some embodiments, the light source includes an array of lasers. Each laser within the array may be configured to generate a respective light beam comprising at least one wavelength.

In some embodiments, the light source is external to the optical module.

In some embodiments, a ratio of receiver optical fibers to transmitter optical fibers is 16:1.

In some embodiments, the optical coupler includes a demultiplexer (DMUX).

In some embodiments, the optical module is a co-packaged optics (CPO) module.

In some embodiments, the system is configured to operably interact with at least one of: a system for performing simulation operations; a system for performing simulation operations to test or validate autonomous machine applications; a system for performing digital twin operations; a system for performing light transport simulation; a system for rendering graphical output; a system for performing deep learning operations; a system for performing generative AI operations using a large language model (LLM); a system implemented using an edge device; a system for generating or presenting virtual reality (VR) content; a system for generating or presenting augmented reality (AR) content; a system for generating or presenting mixed reality (MR) content; a system incorporating one or more Virtual Machines (VMs); a system implemented at least partially in a data center; a system for performing hardware testing using simulation; a system for performing generative operations using a language model (LM); a system for synthetic data generation; a collaborative content creation platform for 3D assets; or a system implemented at least partially using cloud computing resources.
In other embodiments, a method of transmitting optical signals is provided. The method may include receiving a light beam at an optical module of an optical assembly. The method may further include directing portions of the light beam to a plurality of corresponding transmitters of the optical module to produce a plurality of optical signals. The method may further include combining the plurality of optical signals into at least one transmitter optical fiber. The method may further include transmitting the combined optical signal(s) to an optical coupler via the at least one transmitter optical fiber. The method may further include splitting, at the optical coupler, the combined optical signals into a plurality of optical signals based on wavelength, polarization, or wavelength-polarization combinations of each optical signal. The method may further include routing the plurality of optical signals to corresponding optical output ports of the optical assembly for transmission to corresponding receivers via a plurality of receiver optical fibers. The number of transmitter optical fibers is less than the number of optical output ports. The method may further include transmitting the plurality of optical signals to a plurality of receivers via a plurality of corresponding receiver optical fibers, wherein each of the plurality of receiver optical fibers is independently routable from the optical coupler to a corresponding receiver. Alternatively, instead of routing the plurality of optical signals to corresponding optical output ports, the method may comprise coupling the plurality of optical signals into corresponding receiver optical fibers for transmission to corresponding receivers.

In other embodiments, a method of transmitting optical signals is provided. The method may include receiving a light beam at an optical module configured to produce a plurality of optical signals using the light beam. The method may further include directing a portion of the light beam to a plurality of transmitters. The method may further include transmitting the portion of the light beam from the plurality of transmitters to an optical coupler via at least one transmitter optical fiber. The method may further include splitting, at the optical coupler, the portion of the light beam from each transmitter into a plurality of optical signals based on wavelength, polarization, or wavelength-polarization combinations of each optical signal. The method may further include transmitting the plurality of optical signals to a plurality of receivers via a plurality of receiver optical fibers. Each of the plurality of receiver optical fibers may be independently routable from the optical coupler to a corresponding receiver. The number of transmitter optical fibers connecting the transmitter of the optical module to the optical coupler may be less than the number of receiver optical fibers connecting the optical coupler to the corresponding receivers.

In some embodiments, the method further includes detecting characteristics of the portions of the light beam received at the optical coupler and triggering adjustment of a configuration of a light source based on the characteristics detected.

In some embodiments, the method further includes detecting characteristics of the light beam received at the optical module and triggering adjustment of a configuration of a light source based on the characteristics detected.
The disclosure extends to any novel aspects or features described and/or illustrated herein. Further features of the disclosure are characterized by the independent and dependent claims. Any feature in one aspect of the disclosure may be applied to other aspects of the disclosure, in any appropriate combination. In particular, method aspects may be applied to apparatus or system aspects, and vice versa. Furthermore, features implemented in hardware may be implemented in software, and vice versa. Any reference to software and hardware features herein should be construed accordingly. Any system or apparatus feature as described herein may also be provided as a method feature, and vice versa.
System and/or apparatus aspects described functionally (including means plus function features) may be expressed alternatively in terms of their corresponding structure, such as a suitably programmed processor and associated memory. It should also be appreciated that particular combinations of the various features described and defined in any aspects of the disclosure can be implemented and/or supplied and/or used independently.
The disclosure also provides computer programs and computer program products comprising software code adapted, when executed on a data processing apparatus, to perform any of the methods and/or for embodying any of the apparatus and system features described herein, including any or all of the component steps of any method. The disclosure also provides a computer or computing system (including networked or distributed systems) having an operating system which supports a computer program for carrying out any of the methods described herein and/or for embodying any of the apparatus or system features described herein. The disclosure also provides a computer readable media having stored thereon any one or more of the computer programs aforesaid. The disclosure also provides a signal carrying any one or more of the computer programs aforesaid. The disclosure extends to methods and/or apparatus and/or systems as herein described with reference to the accompanying drawings. Aspects and embodiments of the disclosure will now be described purely by way of example, with reference to the accompanying drawings.

### BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.
FIG. 1A illustrates an example system for transmitting optical signals, in accordance with an embodiment of the present disclosure;
FIG. 1B illustrates an example system for transmitting optical signals via an array of lasers, in accordance with an embodiment of the present disclosure;
FIG. 1C illustrates an example system for transmitting optical signals using a plurality of wavelengths, in accordance with an embodiment of the present disclosure;
FIG. 1D illustrates an example system for transmitting optical signals with a sense line and a sensor coupled between a light source and an optical coupler configuration, in accordance with an embodiment of the disclosure;
FIG. 1E illustrates an example system for transmitting optical signals with a sense line and a sensor coupled between a light source and an optical module, in accordance with an embodiment of the disclosure;
   FIG. 1F illustrates an example optical assembly for transmitting optical signals, in accordance with an embodiment of the present disclosure;
FIG. 2 illustrates a method for transmitting optical signals, in accordance with an embodiment of the disclosure;
   FIG. 2A illustrates a method for transmitting optical signals, in accordance with another embodiment of the disclosure;
FIG. 3 illustrates a method for dynamically adjusting the characteristics of the light source, in accordance with an embodiment of the disclosure;
FIG. 4 illustrates a system environment including a datacenter, communication network, and network device(s), in accordance with an embodiment of the disclosure; and
FIG. 5 illustrates a fat tree topology for a datacenter, in accordance with an embodiment of the disclosure.

### DETAILED DESCRIPTION

High-performance computing (HPC) necessitates the construction of large computer clusters, particularly for applications such as artificial intelligence (AI), data analytics, and scientific simulations. These clusters require robust and efficient network environments to ensure optimal performance and scalability. One commonly used network topology in such environments is the fat tree network. A fat tree network topology is designed to provide high bandwidth and non-blocking characteristics, ensuring that any two network devices can communicate with full bandwidth, irrespective of the activity of other compute nodes. This means that if device A communicates with device B and simultaneously, device C communicates with device D, neither pair's communication interferes with the other. This capability allows for handling of maximum traffic on all ports simultaneously, in any combination of port pairs. For instance, in a multi-port switch, multiple ports are dedicated for a specific input and output, resulting in a large number of optical fibers connected to the port switch. As an example, a 1024 port switch in a fat tree topology may need up to 2048 optical fibers to maintain non-blocking communication.

In a non-blocking fat tree network, the architecture is typically structured in multiple layers to achieve full bandwidth availability between any two devices. However, as the number of compute nodes increases, building a non-blocking network often requires multiple layers of switches. Ideally a switch should be able to scale, generation after generation, along two vectors: port speed and number of ports (also known as the 'radix' of the switch). The aggregate bandwidth of the switch (e.g., the maximum number of bytes the network can transfer per the unit) is a product of the two. Each additional layer can introduce significant drawbacks, including increased latency, higher costs of implementation, and potential performance degradation. Therefore, there is a strong incentive to minimize the number of layers to maintain efficiency and reduce costs. The radix of a network device, or the number of ports it possesses, often dictates the network topology and performance. To meet the growing demands of large compute clusters, there is a need to develop network devices with an even greater number of ports. This would allow for more direct connections between compute nodes and reduce the necessity for multiple network layers.

Datacenters are the storage and data processing hubs of the internet. The massive deployment of cloud applications is causing datacenters to expand exponentially in size, stimulating the development of faster switches than can cope with the increasing data traffic inside the datacenter. Current state-of-the-art switches are capable of handling 12.8 Tb/s of traffic by employing electrical switches in the form of application specific integrated circuits (ASICs) equipped with 256 data lanes, each operating at 50 Gb/s. Such switching ASICs typically consume as much as 400 W, and the power consumption of the optical transceiver interfaces attached to each ASIC is comparable. To keep pace with traffic demand, switch capacity doubles approximately every two years. To date, this rapid scaling has been made possible by exploiting advances in manufacturing (e.g., CMOS techniques), collectively described by Moore's law (e.g., the observation that the number of transistors in a dense integrated circuit doubles about every two years). However, in recent years there are strong indications of Moore's law slowing down, which raises concerns about the capability to sustain the target scaling rate of switch capacity. As a result, alternative technologies are being investigated.

A co-packaged optical (CPO) system refers to an integration approach in which optical components, such as lasers, transmitters, multiplexers, and electronic circuits, are packaged together in a single module or assembly. The CPO approach may be used to improve performance, reduce latency, and increase energy efficiency in optical communication systems. By closely integrating these components, CPO systems can achieve higher data transmission rates and lower power consumption compared to traditional approaches where optical and electronic components are packaged separately and connected via external interfaces. However, CPO systems face disadvantages related to space constraints. Such systems are typically limited by the number of optical fibers, and it is practically impossible to connect optical fibers along the relatively short perimeter of a chip package. The limited physical space available for additional optical transceivers and connections can hinder scalability. Furthermore, increased component density poses challenges in heat dissipation and increases design and manufacturing complexity, which can impact production yields and costs. Given these limitations, simply adding more optical fibers to CPO systems is often not feasible.

In order to address these issues and others, embodiments of the present disclosure are directed toward leveraging multiplexing, preferably wavelength division multiplexing (WDM), to enhance the capacity and efficiency of optical communication systems. Embodiments of the present disclosure are directed to optical signal transmission systems, assemblies, and methods. The system of the present disclosure uses an asymmetrical ratio of transmitter optical fibers to receiver optical fibers. Alternatively or additionally, the systems, assemblies and methods of the present disclosure may provide or utilize an asymmetrical ratio of transmitter optical fibers to optical output ports to which receiver optical fibers can be connected. Each of the plurality of receiver optical fibers may thus be independently routable from an optical coupler, or from optical output ports operatively coupled thereto, to corresponding receivers at the destination. Notably, this results in the number of in-the-chassis transmitter optical fibers being less than the number of receiver optical fibers connecting the optical coupler, or the optical output ports operatively coupled thereto, to the corresponding receivers. For instance, the receiver optical fibers may be routed into the chassis to an optical module, resulting in a greater number of transmitter optical fibers than the number of receiver optical fibers. The proposed technique can be used to reduce spatial constraints associated with transmitting and receiving optical signals. The optical module of the present disclosure transmits multiple optical signals on one or few (transmitter) optical fibers to overcome space constraints, and these optical signals are then separated externally to the optical module to enable independent routing to receivers. This technique allows the radix and aggregate bandwidth to be almost doubled without increasing the number of optical fibers required to be connected to the switch IC package. Only a few (transmitter) optical fibers are used for all output signals, thereby reserving most of the available optical fibers for the receivers. The total available number of optical fibers is not split equally between transmit and received, which limits the radix to half of the total number of optical fibers available. Instead, for example, 1/10th of the optical fibers can be used for transmitting and 9/10th for receiving, and each transmitter optical fibers carries 9 optical signals to be split into individual receiver optical fibers externally to the optical module. This split can, or example, be done at the front panel of the chassis in which the switch IC is housed. On the outside of the chassis, it will appear as individual optical fibers (or fiber connectors or ports) and the switch will present a high radix to the user. The receivers can be wide band, e.g., the same receiver can receive any one of many wavelengths, and/or may be polarization independent. Said differently, while transmitters preferably operate on individual wavelengths and/or polarizations, such that the resulting optical signals can be combined into one transmitter optical fiber, receivers are preferably agnostic to wavelength and/or polarization.
An example optical assembly of the present disclosure includes an optical module (e.g., CPO), and an optical coupler (e.g., demultiplexer), among other components. An example system of the present disclosure includes a light source, an optical module (e.g., CPO), and an optical coupler (e.g., demultiplexer), among other components. The light source can either be a single device generating a range of wavelengths and/or polarizations or an array of lasers, each dedicated to a specific wavelength and/or polarization. These light beams are then used by the optical module to individually modulate each light beam with separate data streams. In this regard, the optical module may integrate various optical elements, such as transmitters, power splitters, and multiplexers, to modulate data streams onto different wavelengths, polarizations, or wavelength-polarization combinations of the incoming light beam, multiplex or otherwise combine the resulting optical signals, and transmit the multiplexed/combined optical signals over a single optical fiber (i.e. a transmitter optical fiber). The example system or optical assembly may also incorporate an optical coupler to receive the multiplexed/combined optical signal, separate or split the multiplexed signal into optical signals at individual wavelengths and/or polarizations, and route each optical signal to its respective destination via dedicated optical paths and/or through optical ports on a faceplate. As such, embodiments of the disclosure aim to provide a scalable, efficient, and reliable solution for high-density optical communication environments where the number of transmitting optical fibers (e.g., optical fiber exiting the optical module) is less than the number of receiving optical fibers (e.g., optical fibers exiting the optical coupler) and/or optical output ports to which receiver optical fibers can be connected. The optical output ports or connectors may be part of the optical coupler or operably coupled thereto; in either case, the system or assembly preferably routes the plurality of optical signals to corresponding optical output ports for transmission to receivers via corresponding receiver optical fibers.

Embodiments of the present disclosure now will be described more fully hereinafter with reference to the accompanying drawings in which some but not all embodiments are shown. Indeed, the present disclosure may be embodied in many different forms and should not be construed as limited to the embodiments set forth herein; rather, these embodiments are provided so that this disclosure will satisfy applicable legal requirements. Like numbers refer to like elements throughout. As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

An optical fiber is a flexible, transparent fiber made by drawing glass or plastic to a compressed diameter. It will be appreciated that, in this regard, optical fibers are distinguished from planar chip-integrated waveguides, e.g. used in photonic integrated circuits (PIC). Optical fibers may be used in various contexts, such as for telecommunications, long distance transmissions, power transmissions, light transmissions, sensor applications, and computer networking. An optical fiber may include a core surrounded by a cladding material with a lower index of refraction. In some cases, an optical fiber may include a cylindrical dielectric waveguide that transmits light along its axis through a process of total internal reflection. Materials used in the creation of optical fibers may include silica, fluorozirconate (fluoride glass), fluoroaluminate, chalcogenide glasses, crystalline materials, and/or a combination of such materials. In some cases, optical fibers may be configured to maintain polarization of a medium (e.g., a light beam polarization) through polarization-maintaining fibers (PM fibers). PM fibers may comprise a core and cladding structure which may induce birefringence.

As used herein, the term "module" refers to an integrated unit comprising various components designed to perform specific functions within an optical communication system. A module can be implemented as an integrated circuit, where multiple electronic and optical components are fabricated on a single chip to achieve high efficiency and compactness. A module may also be embodied as a photonic integrated circuit (PIC), which integrates multiple photonic functions, such as light generation, guiding, modulation, and detection, onto a single substrate, offering enhanced performance and miniaturization. A module, as described herein, may include optical components such as optical fibers, waveguides, lasers, modulators, photodetectors, multiplexers, demultiplexers, and/or optical amplifiers. A module may further comprise electrical components, including but not limited to, transistors, diodes, capacitors, resistors, and electrically conductive pathways. Such a module may partially or fully comprise components capable of receiving, processing, and transmitting optical signals, thereby providing an integrated solution for advanced optical communication systems as described in greater detail below.

A light beam may refer to a fiber-optic communication medium comprising optical signals. In general, a beam of light may communicate optical signals via properties of the light beam, including but not limited to wavelengths, frequencies, polarization, power of the light beam, and/or intensity of the light beam. In some cases, the beam of light may be conducted, transferred, guided, or routed to transmit optical signals from a first destination to a second destination, using one or more optical elements, as described in greater detail below.

Components described herein as being "operably coupled" may refer to optical connections between components to enable transfer or light and/or optical signals therebetween. Components described as being operably coupled may be configured to direct and/or guide an optical signal (e.g., a light beam) between a first component (e.g., an optical module) and a second component (e.g., an optical coupler) to enable communication and functionality between components. Operably coupled components may communicate, transmit, receive, conduct, trigger, and/or react/respond to light and/or optical signals via an optical medium (e.g., a connection established via at least one optical fiber and/or waveguide).

Co-packaging may refer to the close integration of different electrical and/or optoelectronic chips in the same package. The different chips that constitute the co-packaged system may be assembled on a single substrate in what is typically called the multi-chip module (MCM) assembly. The MCM assembly can include switching circuitry surrounded by peripheral or satellite chips. Various example configurations of an MCM assembly will be described in further detail herein. In some embodiments, the switching circuitry and surrounding satellite chips are all mounted on a common substrate. The MCM assembly may be provided in a larger housing of a networking device. The switching circuitry may include one or more core digital Application Specific Integrated Circuits (ASICs), central processing units (CPUs), graphics processing unit (GPUs), microprocessors, field programmable gate arrays (FPGAs), combinations thereof, and the like. The switching circuitry may include a number of input ports and/or output ports. The Input/Output (I/O) ports may include electrical ports and/or optical ports. Additionally, the switching circuitry may include a combination of electrical blocks and optical blocks. The electrical blocks of the switching circuitry may include a number of electrical switches that are configured to route signals in an electrical domain. The optical blocks of the switching circuitry may include a number of optical components that are configured to generate, detect and route signals in an optical domain. The MCM assembly, in some embodiments, may concern or include multiple satellite chips that are assembled on the same substrate as the switching circuitry. In some embodiments, a configuration of the optical block(s) and a configuration of the electrical block(s) depends (e.g., is based on) on the number of optical ports in the I/O ports.

As discussed above, optical I/Os, which may also be referred to as optical connectors or ports, may be placed at the front panel. As mentioned above, connectivity between the MCM assembly and optical I/Os may be transferred to the front panel through optical fibers. This connection may be made directly with an optical I/O of the switching circuitry or may be made with one or more of the satellite chips. The connection is often made with one or more of the satellite chips because the satellite chips may include the electro- optic converters and, possibly, serializer/deserializer (SERDES) to natively support the connection. The satellite chips may include one or more of a digital signal processor (DSP) processor, driver, trans-impedance amplifier, laser, modulator, photodiode, SERDES, or the like.

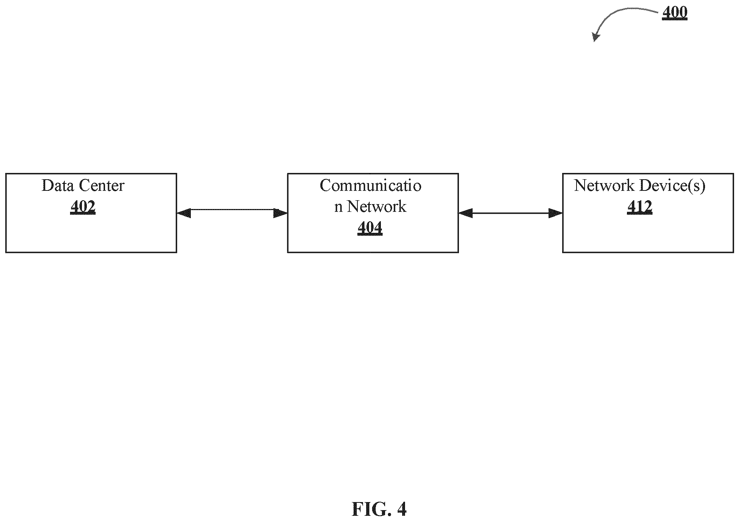

FIG. 4 illustrates a system environment 400, in accordance with an embodiment of the disclosure. The system environment 400 may include a datacenter 402, a communication network 404, and network device(s) 412.

The datacenter 402 may be a centralized facility designed to house computing resources and related components. The primary function of the datacenter 402 may be to support the infrastructure required for advanced computational tasks, for efficient, secure, and reliable operations. The datacenter 402 may include building and structural components, including power supplies, cooling systems, fire suppression systems, and physical security measures that are configured to maintain optimal operating conditions and protect the equipment from environmental hazards and unauthorized access. The core of the datacenter 402 may include high-performance servers or compute nodes, often arranged in racks, and connected through high-speed networks. These servers may include processors (e.g., CPUs, GPUs, and/or the like), memory (e.g., RAM), and storage solutions (e.g., hard disk drives (HDDs), solid state drives (SSDs), and/or the like). The hardware configuration may be optimized for parallel processing and high throughput, catering to the demands of high-performance computing (HPC) applications.

The datacenter 402 may include high-speed network equipment, such as network switches (e.g., Ethernet switches), routers, firewalls, and/or the like to facilitate fast and secure data transmission within the datacenter 402 (e.g., between the servers or compute nodes) and between external networks. The datacenter 402 may facilitate communication between servers or compute nodes through a network topology that ensures efficient data exchange, minimizes latency, and maximizes bandwidth. The network topology may define how various network devices, such as switches and routers, are interconnected for data flow. By implementing an effective network topology, the datacenter 402 can support high-performance computing tasks. Examples of various network topologies may include hierarchical networking topologies such as the fat tree topology, Slim Fly topology, Dragonfly topology, and/or the like.

The communication network 404 may connect the datacenter 402 to network device(s) 412 and other external devices for data exchange and connectivity. Examples of a communication network 404 that may be used to connect the datacenter 402 and the network device(s) 412 include an Internet Protocol (IP) network, an Ethernet network, an InfiniBand (IB) network, a Fiber Channel network, the Internet, a cellular communication network, a wireless communication network, combinations thereof (e.g., Fiber Channel over Ethernet), variants thereof, and/or the like. Each type of network offers specific advantages tailored to different operational requirements. For instance, an IP network or Ethernet network may provide widespread compatibility and ease of integration, supporting various protocols and applications across the datacenter 402 and the network device(s) 412 (and/or external devices). An InfiniBand^{®} network may offer high throughput and low latency, ideal for HPC environments where rapid data transfer and minimal delay are required. Fiber Channel networks may be employed for their robust performance in storage area networks (SANs), ensuring fast and reliable access to storage resources. Cellular and wireless communication networks may be used to extend connectivity to remote or mobile devices for increased flexibility and accessibility. The ability of the communication network 404 to incorporate multiple network types and configurations allows the datacenter 402 to adapt to diverse application needs, from general data communication to specialized HPC tasks.

The network device(s) 412 may include a variety of computing devices capable of sending and receiving signals over the communication network 404. The network device(s) 412 can range from personal computing devices to complex server configurations. Examples include Personal Computers (PCs), laptops, tablets, smartphones, and servers. The network device(s) 412 may facilitate user interactions with the datacenter 402, allowing for data input, retrieval, and processing from remote locations. In addition to individual computing devices, the network device(s) 412 may also include collections of servers or additional datacenters. For instance, these could be other datacenters similar to or the same as datacenter 402. Such an interconnection may allow for the formation of a distributed computing environment for improved redundancy, load balancing, and disaster recovery capabilities. By linking multiple datacenters, the system environment 400 can leverage geographically dispersed resources, optimizing performance and ensuring high availability.

As described herein, the datacenter 402 and/or the network device(s) 412 may include storage devices and processing circuitry for executing computing tasks, such as controlling the flow of data internally and over the communication network 404. The processing circuitry may comprise software, hardware, or a combination thereof. For example, the processing circuitry may include a memory containing executable instructions and a processor (e.g., a microprocessor) that executes these instructions. The memory may correspond to any suitable type of memory device or collection of memory devices configured to store instructions. Non-limiting examples of suitable memory devices include Flash memory, Random Access Memory (RAM), Read Only Memory (ROM), variants thereof, combinations thereof, or similar technologies. In specific embodiments, the memory and processor may be integrated into a common device, such as a microprocessor with integrated memory. Additionally or alternatively, the processing circuitry may comprise hardware components, such as an application-specific integrated circuit (ASIC). Other non-limiting examples of processing circuitry include Integrated Circuit (IC) chips, CPUs, GPUs, microprocessors, Field Programmable Gate Arrays (FPGAs), collections of logic gates or transistors, resistors, capacitors, inductors, and diodes. Some or all of the processing circuitry may be provided on a Printed Circuit Board (PCB) or a collection of PCBs. It should be appreciated that any appropriate type of electrical component or collection of electrical components may be suitable for inclusion in the processing circuitry.

In addition, although not explicitly shown, it should be appreciated that the datacenter 402 and network device(s) 412 may include one or more communication interfaces for facilitating wired and/or wireless communication between one another and other unillustrated elements of the system environment 400. These communication interfaces may include a variety of technologies, including but not limited to Ethernet ports, fiber optic connections, Wi-Fi^{®} transceivers, Bluetooth^{®} modules, and cellular communication modules for integration and interoperability among the various components within the system environment 400.

Furthermore, it should be understood that the system environment 400 may include additional components and functionalities within the scope of the present disclosure. These components may comprise, without limitation, additional processing units, specialized accelerators (such as Tensor Processing Units or TPUs), enhanced security modules, and redundant power supplies. The inclusion of these elements is intended to ensure that the system environment 400 is robust, scalable, and capable of meeting diverse operational requirements. Any variations, modifications, or adaptations of the described elements that fall within the spirit and scope of the invention are considered to be encompassed by the present disclosure. This includes any combinations, sub-combinations, or enhancements of the various described elements to achieve improved performance, reliability, and efficiency in the system environment 400.

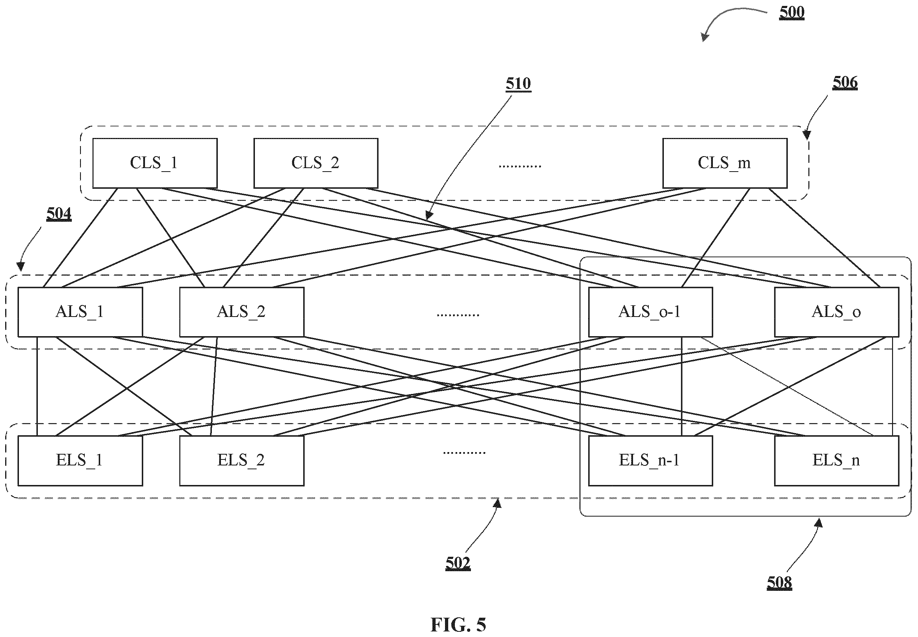

FIG. 5 illustrates a fat tree topology for a datacenter (e.g., the datacenter 402 in FIG. 4), in accordance with embodiments of the invention. However, it is to be understood that the present disclosure is not limited to a fat tree topology. Other network topologies may also be contemplated within the scope of the disclosure. Examples of such alternative topologies include, but are not limited to, Slim Fly topology, which is designed to reduce the number of hops and cable lengths between nodes; Dragonfly topology, which aims to enhance network scalability and reduce latency through a hierarchical group of interconnected switches; and other hierarchical or non-hierarchical topologies that may be optimized for specific performance, scalability, or cost considerations. The principles and innovations disclosed herein can be applied to these and other network topologies to achieve similar advantages and benefits. Any modifications, variations, or adaptations of the network topologies that fall within the spirit and scope of the present invention are considered to be encompassed by this disclosure.

As shown in FIG. 5, the fat tree topology may include three distinct layers: the edge layer 502, the aggregation layer 504, and the core layer 506. The edge layer 502, located at the bottom of the hierarchy, incorporates Top-of-Rack (ToR) switches. The edge layer 502 may serve as the initial point of aggregation for traffic originating from the servers. The servers and server racks are generally connected to the edge layer 502, although they are not illustrated in the figure. The edge layer 502 may include a plurality of switches, designated as ELS_1, ELS_2, ..., ELS_n, as shown in FIG. 5. The aggregation layer 504 may be positioned above the edge layer 502 and may further consolidate traffic from multiple edge layer switches ELS_1, ELS_2, ..., ELS_n. The aggregation layer 504 may be composed of switches ALS_1, ALS_2, ..., ALS_o. The aggregation layer switches may be configured to aggregate data traffic from the edge layer 502, ensuring efficient load balancing and data flow management. At the top of the hierarchy is the core layer 506, which may provide high-speed interconnectivity and enables communication among different racks within the datacenter 402. The core layer 506 may include a series of switches labeled as CLS_1, CLS_2, ..., CLS_m. These core layer switches may be configured to ensure that data can traverse the network quickly and efficiently, minimizing latency and maximizing bandwidth.

The switches within each layer (e.g., edge layer 502, aggregation layer 504, core layer 506) may be 1U switches, where "1U" refers to the industry-standard size for rack-mounted switches and servers. The switches be electrical switches, optical switches, hybrid electro-optical switches, or any combination thereof. The switches may be implemented with suitable hardware and/or software that enables the routing of signals in the appropriate domain. For example, an electrical switch may include receivers that receive and convert optical signals into electrical signals for routing within the electrical switch. A receiver of an electrical switch may include a transimpedance amplifier (TIA), a photodetector, and a controller which all serve to convert the optical signals into electrical signals. Each electrical switch may further include transmitters that convert electrical signals routed within the electrical switch into optical signals for output to another switch (optical or electrical) within the system. For example, a transmitter of an electrical switch may include a light source, a modulator, and a controller that controls the modulator and light source. In some embodiments, receiver/transmitter pairs may be integrated into a single transceiver. Each electrical switch may also include internal switching circuitry for routing electrical signals within the electrical switch. An optical switch, on the other hand, may function by directly routing optical signals without converting them to electrical signals. Each optical switch may include optical receivers, such as photodetectors and wavelength-division multiplexing (WDM) demultiplexers, that receive incoming optical signals. These optical signals may then be directed through internal optical switching components, such as micro-electromechanical systems (MEMS) mirrors, waveguides, or optical cross-connects, which route the signals to the appropriate output paths. The optical switch may also include optical transmitters, such as laser diodes and modulators, which transmit the routed optical signals to the next switch in the network. A hybrid electro-optical switch may combine both electrical and optical components to route signals. Such a switch may include receivers that convert optical signals into electrical signals using TIAs and photodetectors, similar to those in electrical switches. These electrical signals can then be routed within the switch using internal electrical switching circuitry. Additionally, the hybrid switch may contain optical switching components, such as WDM multiplexers and MEMS devices, to route optical signals directly. The transmitters in a hybrid switch may include both electrical-to-optical converters and direct optical transmitters, enabling the hybrid switch to interface with both electrical and optical networks. For example, a hybrid switch's transmitter may include a light source, a modulator for optical signals, and traditional electrical signal transmitters, providing routing capabilities across different signal domains.

The interconnections 510 between the switches within the network topology may be implemented via optical fibers or traditional electrical cables, depending on the specific requirements of the system. For instance, the communication lanes may be constructed of dedicated differential cable pairs and/or fiber optics, each tailored to provide optimal performance for the data transmission needs. The dedicated differential cable pairs used in these interconnections may include a variety of cable media such as copper, aluminum, gold, silver, nickel, or composite materials like copper-clad aluminum, copper-clad steel, or bimetallic conductors. These materials may be chosen for their electrical conductivity and durability, ensuring reliable and efficient data transmission. For example, in a four-lane network, each lane may consist of its own dedicated copper cable, providing isolated physical paths for each communication lane of a deserialized data stream. This configuration helps in maintaining signal integrity and reducing crosstalk between lanes.

Alternatively, fiber optic cables may be employed for the interconnections. Fiber optics are capable of transmitting data streams via different wavelengths of light, with each data stream assigned a unique wavelength. The use of fiber optic cables may allow multiple data streams to be transmitted simultaneously through a single fiber optic cable, significantly increasing the bandwidth and efficiency of the network, and is particularly advantageous for long-distance data transmission and for applications requiring high data transfer rates. Various optical networking technologies can be used to transmit multiple optical signals (e.g., data signals or data streams) over a single optical fiber within an optical link with little to no optical signal interference. These technologies may be used to improve bandwidth efficiency and reduce the amount of infrastructure needed for data communication.

One such technology is Time Division Multiplexing (TDM). In TDM, multiple optical signals can be transmitted over a single optical fiber by assigning each optical signal a respective time slot and transmitting an optical signal during its assigned time slot. The time slots are allocated in a cyclic manner, with each optical signal transmitting a small amount of data during its assigned time slot. The time slots are very short, on the order of microseconds, and the cycle repeats many times per second, allowing for rapid data transfer.

Another technology is Frequency Division Multiplexing (FDM). In FDM, multiple optical signals can be transmitted over a single optical fiber by assigning each optical signal a respective frequency band. Each optical signal is modulated onto a respective carrier frequency to generate a modulated signal, and these modulated signals are combined and transmitted over a single optical fiber. At the receiver, the modulated signals are separated using filters (e.g., band-pass filters) that permit optical signals meeting specific frequency specifications to pass through while filtering out other signals. FDM allows optical links to simultaneously transmit multiple channels over the same frequency band.

Yet another technology is Wavelength Division Multiplexing (WDM). In WDM, multiple optical signals having different wavelengths are combined into a single optical signal and transmitted over a single optical fiber. WDM techniques involve combining and separating multiple optical signals with different wavelengths onto a single optical fiber, allowing for more data to be transmitted and increasing the capacity of the optical fiber. Examples of WDM technology include Coarse Wavelength Division Multiplexing (CWDM) and Dense Wavelength Division Multiplexing (DWDM). CWDM combines multiple optical signals at different wavelengths into a single optical signal and transmits it over a single optical fiber. CWDM uses a wider wavelength separation, such as about 80 nanometers (nm), which means it supports fewer channels and has lower power budgets, making it suitable for shorter distances, up to about 80 kilometers (km). CWDM requires less complex equipment and lower-cost optical components, making it a cost-effective solution for applications that do not require dense wavelength separation. In contrast, DWDM uses narrower wavelength separation, such as about 0.8 nm, allowing for higher channel capacity and longer distances, but typically at a higher cost and complexity.

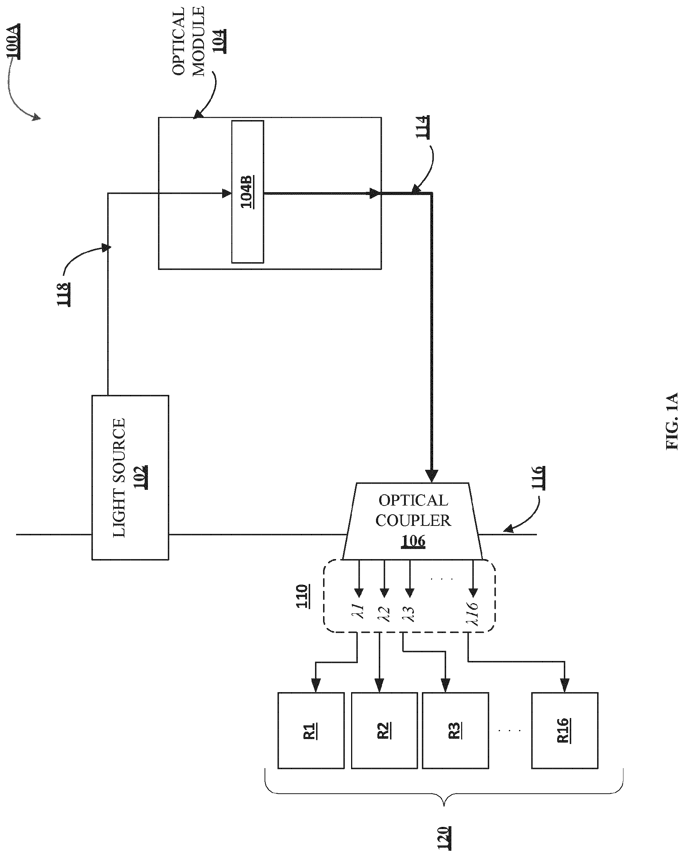

The system and optical assembly of the present disclosure may incorporate any of the aforementioned functionalities, including those of electrical switches, optical switches, hybrid electro-optical switches, or any combination thereof, as described in further detail in FIGS. 1A-1F. The system and optical assembly may be configured to be versatile and adaptable, enabling it to replace any of the switches in the network topology, including those in the edge layer 502, aggregation layer 504, or core layer 506. Additionally, the system and optical assembly described herein, e.g. with reference to FIGS. 1A-1F, can replace any POD (Point of Delivery) of switches discussed herein. A POD should be generally understood as a collection of network elements (e.g., switches and/or servers) that is repeatable within the topology at issue.

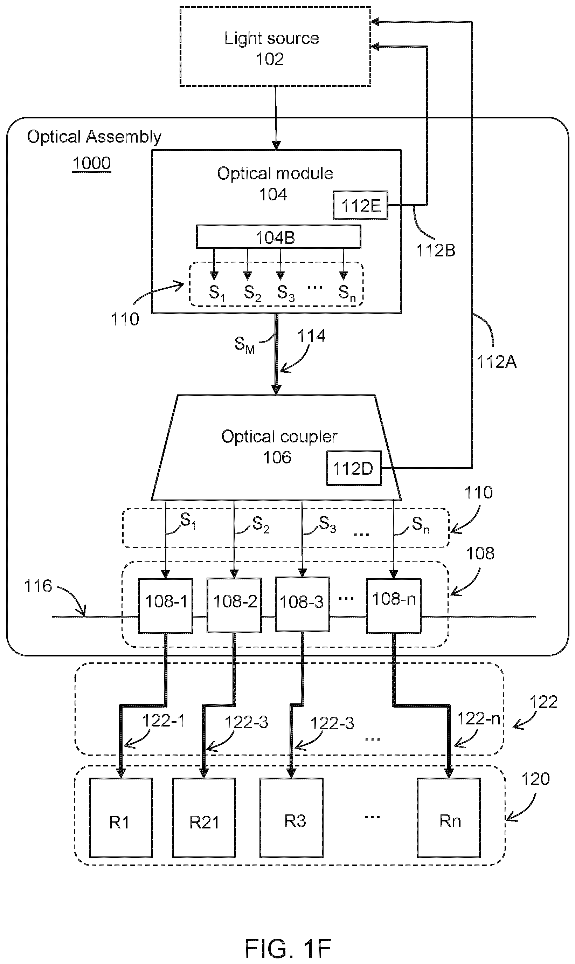

FIGS. 1A-1E illustrate example systems 100A-100E for transmitting optical signals, in accordance with embodiments of the present disclosure. The system 100A-100E may include a light source 102, 102A an optical module 104, and an optical coupler 106. FIG. 1F illustrates an example optical assembly 1000 for transmitting optical signals, in accordance with embodiments of the present disclosure. The optical assembly 1000 may form part of the system 100A-E of FIGS. 1A-1E. The embodiments described herein are presented for illustrative purposes only and are not intended to be limiting. It should be understood that the example systems and assemblies, as described, may comprise fewer or additional modules, units, or components that are not explicitly detailed in the following description. These modifications and variations that align with the principles and scope of the appended claims are considered to fall within the scope of the disclosure.
With reference to FIG. 1F, an example optical assembly 1000 is shown. The systems 100A-E of FIGS. 1A-1E may include the optical assembly 1000. In some embodiments, the optical assembly 1000 may be part of a network device such as a switch. The optical assembly 1000 comprises an optical module 104 including a plurality of transmitters 104B; an optical coupler operably coupled to the optical module 104 via at least one transmitter optical fiber 114, and preferably a plurality of optical output ports or connectors 108 (e.g. 108-1, 108-2, 109-3, ... 108-n). The optical output ports or connectors 108 are coupleable or connectable to corresponding receiver optical fibers 122 for independently routing optical signals from the optical assembly 1000 to remote/external receiver devices 120 (e.g. R1, R2, R3, ... Rn), as illustrated. In preferred examples, the optical output ports 108 are provided at/in an external panel (e.g. faceplate/panel 116) of a chassis (not shown) in which the optical assembly 1000 is housed. The optical module 104 is configured to: receive a light beam from a light source 102 (which may optionally be part of the optical assembly 1000, as indicated by the dashed box in FIG. 1F, and discussed further below with reference to FIGS. 1A-1E); direct portions of the light beam to corresponding transmitters 104B to modulate the light and produce a plurality of optical data signals 110 (e.g. signals S₁, S₂, S₃, ... Sₙ); and combine or couple the plurality of optical signals 110 into the at least one transmitter optical fiber 114, as described in further detail below. The combined or multiplexed optical signal S_{M} is then transmitted to the optical coupler 106 via the at least one transmitter optical fiber 114. The optical coupler 106 is configured to split or separate the combined optical signal S_{M} into a plurality of optical signals 110 based on wavelength, polarization, or wavelength-polarization combinations of each constituent optical signal 110, and route or otherwise couple the plurality of optical signals 110 to corresponding optical output ports 108 for further transmission to corresponding receivers 120 via receiver optical fibers 122, as described in greater detail below with reference to FIGS. 1A-1E.
The number of transmitter optical fibers 114 is less than the number of optical output ports 108 to which receiver optical fibers 122 can be connected, thereby increasing the radix and reducing spatial constraints associated with transmitting and receiving optical signals. As discussed, the optical assembly 1000 of the present disclosure further allows receiver optical fibers 122 to be independently routable from any of the optical output ports 108, to corresponding receivers 120 at remote destinations. For example, a first receiver R1 at first location can be connected to a first port 108-1 via a first receiver optical fibers 122-1, and a second receiver R2 at a second location can be connected to a second port 108-2 via a second receiver optical fibers 122-2, and so on; and these connections can be changed as needed simply by swapping the connections to the output ports 108. **In** this way, embodiments of the invention provide a scalable, efficient, and reliable solution for high-density optical communication environments. In an alternative embodiment, the optical assembly 1000 may include a plurality of (integrated) receiver optical fibers 122 (e.g. instead of optical output ports 108), and the optical coupler 106 is configured to couple the plurality of optical signals into the corresponding receiver optical fibers 122 for transmission to receivers 120, using suitable fiber couplers/coupling means, as is known the art.
In some embodiments, the optical assembly 1000 further includes a sense line coupled between a light source 102 and the optical coupler 106, as illustrated. The optical coupler 106 can then provide real-time or near real-time feedback to the light source 102 in the form of a feedback signal 112A to communicate an operational status and any practical effects arising during the implementation of the optical assembly 1000, such as thermal variations and other environmental factors. In this regard, the optical coupler 106 may include a sensor device 112D operably coupled thereto or integrated therein that monitors these conditions. The sensor device 112D can detect various parameters such as temperature, signal strength, and wavelength stability, and relay this information back to the light source 102. By continuously monitoring these factors, the sensor device 112D enables the optical assembly 1000 to dynamically adjust its operation to maintain optimal performance.
Alternatively or additionally, the optical assembly 1000 can further include a sense line coupled between the light source 102 and the optical module 104, as illustrated. The optical module 104 can then provide real-time or near real-time feedback to the light source 102 in the form of a feedback signal 112B to communicate performance metrics and signal integrity information, such as signal strength, modulation accuracy, and any detected anomalies that may affect the quality of the transmitted signals. In this regard, the optical module 104 may include a sensor device 112E operably coupled thereto or integrated therein that monitors these performance metrics. The sensor device 112E can detect and measure various parameters, including but not limited to, signal strength, modulation accuracy, and wavelength alignment. This information may then be relayed back to the light source 102, enabling the light source 102 to dynamically adjust its output to maintain optimal signal quality. By incorporating such a sensor device 112B, the optical module 104 may enable continuous monitoring and adjustment.

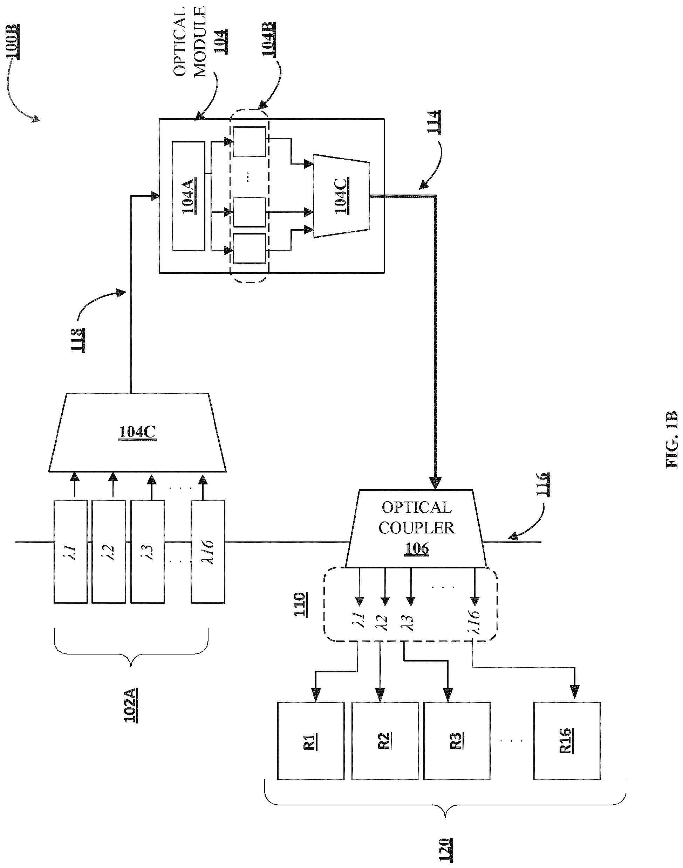

The light source 102 may be configured to generate light beams at different wavelengths, polarizations, or wavelength-polarization combinations. The light source 102 can be configured as either a single laser (e.g., a comb laser) that produces light beams at different wavelengths, polarizations, or wavelength-polarization combinations, or as an array of lasers 102A (as described in greater detail below with reference to FIG. 1B), each dedicated to generating a light beam at a specific wavelength, polarization, or wavelength-polarization combination. In an example embodiment, the light source 102 may be a comb laser capable of generating light beams with pulses at multiple discrete wavelengths, polarizations, or wavelength-polarization combinations.

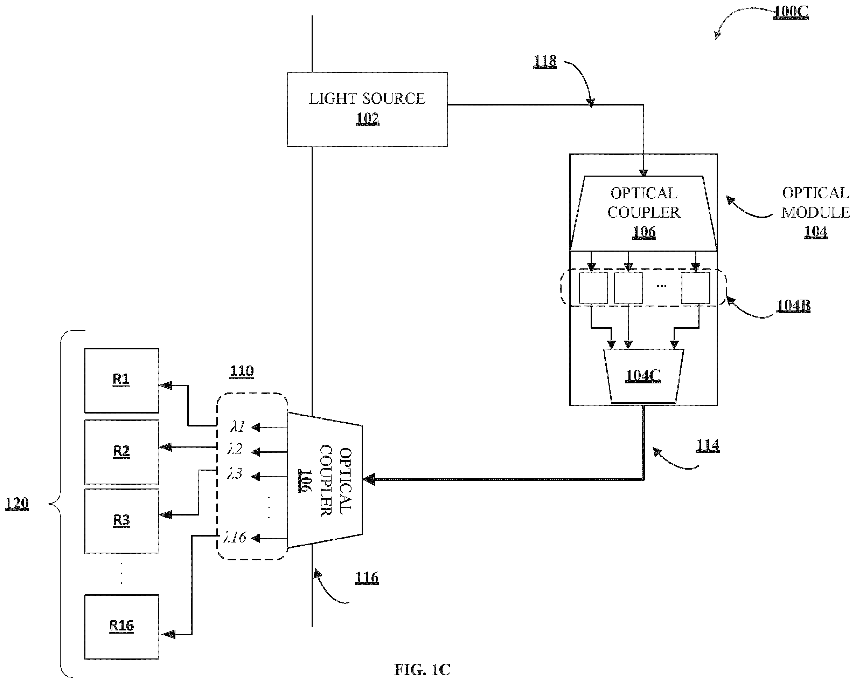

The optical module 104 may be configured to integrate various optical components such as light sources (e.g., light source 102), optical power splitters (e.g., optical power splitters as described in connection with FIG. 1B), transmitters (e.g., transmitters 104B), and multiplexers (e.g., multiplexers as described in connection with FIG. 1B and FIG. 1C) within a cohesive structure, optimizing space and enhancing performance as described in greater detail below. By consolidating these components, the optical module 104 may facilitate efficient optical signal processing and transmission, making it suitable for high-density optical communication environments. The transmitters 104B may correspond to transmitters of a graphics processing unit (GPU), a switch (e.g., a high-speed network switch), a network adapter, a central processing unit (CPU), a data processing unit (DPU), etc. In some embodiments, the optical module 104 is configured as a co-packaged optical (CPO) unit.

The optical module 104 may be operably coupled or coupleable to the light source 102, 102A via an optical fiber 118 (see, e.g. FIG. 1A). Alternatively, the optical module 104 may have an integrated light source (on-chip), either in addition to or instead of the external light source (e.g., light source 102). In scenarios where the optical module 104 includes an integrated light source, this internal light source may be configured to produce light beams at various wavelengths, polarizations, or wavelength-polarization combinations and may have capabilities similar to those of the external light source. When both internal and external light sources are utilized, the integrated light source can serve as a backup in case the external light source fails, ensuring continuous operation and improved reliability. Additionally, having multiple light sources can enable the optical module to handle higher data loads by distributing the generation of light beams between the internal and external sources.

Where the optical module 104 includes an integrated light source, the optical module 104 may utilize advanced modulation techniques or nonlinear optical processes to produce the desired range of light beams. For instance, the optical module 104 may employ electro-optic modulation, where the phase or amplitude of a continuous wave (CW) laser input signal is modulated at high frequencies to create multiple light beams at different wavelengths, polarizations, or wavelength- polarization combinations. Alternatively, nonlinear optical effects such as four-wave mixing or self-phase modulation within a highly nonlinear medium (e.g., a microresonator or specialized optical fiber) may be used to create multiple light beams at different wavelengths, polarizations, or wavelength-polarization combinations.
The optical module 104 may implement WDM by modulating each wavelength, polarization, or wavelength- polarization combination from the light source 102, 102A (e.g. in each portion of the light beam) with a separate data stream. These modulated data streams may then be multiplexed or otherwise combined or coupled into at least one, and preferably one, optical fiber (referred to herein as a transmitter optical fiber), with each data stream transmitted on a different wavelength, polarization, or wavelength- polarization combination of light via the optical fiber 114. The type of WDM implemented may vary based on the specific operational requirements of the network, including but not limited to, required data rates, transmission distance, cost considerations, and the overall architecture of the optical network. The present disclosure contemplates the use of any suitable type of WDM (e.g., Dense WDM, Coarse WDM, and/or the like) as dictated by the operational needs and constraints of the specific network.

To implement WDM, the optical module 104 may include an array of transmitters 104B (e.g. see FIGS. 1B, 1C) integrated therein, each configured to individually modulate a particular wavelength, polarization, or wavelength- polarization combination of the light received from the light source 102 with separate data streams, to produce optical signals 110 effectively encoding distinct information onto different wavelengths (e.g., λ1, λ2, ..., λ16), polarizations, or wavelength-polarization combinations. In an instance in which the light source 102 is a single device that produces a light beam with a range of different wavelengths, polarizations, or wavelength-polarization combinations, the incoming light beam may be split into multiple portions, with each portion being assigned (and directed) to a different transmitter or subset of transmitters 104B, as described in greater detail below.

As shown in FIG. 1A, the light beam or portion of the light beam may be directed to a transmitter 104B within the optical module 104, enabling individual modulation of each wavelength, polarization, or wavelength-polarization combination. Alternatively, subsets of the split portions of the light beam can be assigned to groups of transmitters 104B (e.g., as shown in FIGS. 1B, 1C and described below), facilitating flexible management of the optical signals. By utilizing such splitting techniques, the optical module 104 can efficiently distribute a light beam generated by a single light source 102 to a single or group of transmitters 104B, each responsible for encoding a separate data stream onto a specific wavelength, polarization, or wavelength-polarization combination. Alternatively, in an instance in which the light source 102 is configured as multiple devices (e.g., as shown in FIG. 1B and described below), each dedicated to generating a light beam/optical signal at a specific wavelength, polarization, or wavelength-polarization combination, each generated light beam may be assigned (and directed) to a corresponding transmitter within the optical module 104. In this configuration, each transmitter 104B may receive a dedicated light beam/optical signal directly from a corresponding light source.

The optical module 104 may further comprise a variety of additional components beyond the transmitters 104B, as previously described. These additional components may include, but are not limited to, power splitters (as described in connection with FIG 1B), wavelength splitters, polarization splitters, multiplexers (as described in connection with FIG. 1B and FIG. 1C), lenses, couplers, optical amplifiers for enhancing signal strength, optical fibers for directing light paths between each component, optical isolators to prevent back reflections, and optical filters for selective wavelength management. Furthermore, the optical module 104 may incorporate photonic integrated circuits (PICs) to integrate multiple photonic functions into a compact form factor, thermal management elements such as heat sinks and temperature sensors to maintain optimal operating conditions, and control electronics for managing the operation of the various optical and electronic components. In embodiments where the optical module 104 is configured as a co-packaged optical (CPO) unit, the components may differ to optimize integration with other electronic circuits and systems. For instance, a CPO unit may include specialized interfaces for seamless communication with adjacent electronic chips, advanced cooling solutions tailored for high-density environments, and miniaturized optical components to fit within the compact footprint of the co-packaged design.

It is to be understood that some components of the optical module 104 may be integrated within the optical module 104, while others may be external to the optical module 104, depending on the specific design and operational requirements. The configuration of these components may vary, and the inclusion or exclusion of certain components is contemplated within the scope of the disclosure. The descriptions herein are for illustrative purposes only, and various other combinations and configurations of internal and external components are possible and considered to be within the scope of the disclosure. Any modifications, variations, or equivalent arrangements that fall within the principles and scope of the appended claims are considered to be part of the disclosure.

The optical coupler 106 may be operably coupled to the optical module 104 via the transmitter optical fiber 114 and configured to separate or split the multiplexed/combined optical signal S_{M} into individual signals 110 (e.g. signals S₁, S₂, S₃, ... Sₙ) based on their wavelength, polarizations, or wavelength- polarization combination. Each individual signal 110 may then be routed to its corresponding destination in the network. Preferably, each individual signal 110 is routed to its corresponding optical output port or connector 108 (e.g. ports 108-1, 108-2, 108-3, ...108-n). This independent routing provides a high radix. The separation/splitting process may involve demultiplexing the combined optical signal S_{M} into its constituent parts, ensuring that each unique wavelength and/or polarization is isolated. Once separated, these individual optical signals 110 may be directed through dedicated optical paths to their respective network destinations. In an example embodiment, each wavelength or optical signal 110 may correspond to a specific optical output port 108, e.g. on the network device, allowing for distinct data streams to be accessed independently (and independently routed to the external receivers 120 via receiver optical fibers 122). The splitting/demultiplexing process may ensure that the single optical signals 110 may effectively be split and routed to their respective optical output ports 108, e.g. located on a faceplate 116 of a network device in which the optical assembly is provided. By assigning each optical output port 108 a specific wavelength (e.g., λ1, λ2, ..., λ16) or optical signal 110, multiple high-bandwidth data streams may be managed simultaneously without interference.

External receiving devices 120 (or receivers), such as optical switches, optical routers, servers, PICs, integrated circuits, transponders, and/or other components, such as those found in a datacenter (e.g., the datacenter 402 in FIG. 4), may receive the individual optical signals 110 separated by the optical coupler 106 via individual receiving optical fibers 122. Preferably, the receivers 120 (e.g. R1, R2, R3, etc.) may access the individual optical signals 110 using receiving optical fibers 122 operably coupled/coupleable to the designated optical output ports 108, preferably located on the faceplate 116. As such, the faceplate 116 may serve as an interface for accessing the individual optical signals 110 separated by the optical coupler 106. The faceplate 116 may be configured to facilitate the organized connection of external receiving devices 120 to the network device. As described above, the faceplate 116 preferably includes an array of optical output ports 108 coupleable or connectable to receiver optical fibers 122. Alternatively or additionally, the faceplate 116 may include an array of optical receiving fibers 122 that carry the individual optical signals, each corresponding to a specific wavelength, polarization, or wavelength-polarization combination. The optical output ports 108 and/or optical receiving fibers 122 may enable the routing of the separated optical signals 110 to various external receiving devices 120 efficiently.

The faceplate 116 preferably includes a plurality of optical output ports 108, where each port 108 may correspond to a distinct optical signal 110 in a specific wavelength (e.g., λ1, λ2, ..., λ16), polarization or wavelength- polarization combination. This configuration allows an external receiving device 120 to connect to a specific optical output port 108 and retrieve the associated data stream without interference from other streams. The connection can be established using standard optical connectors, ensuring compatibility with a wide range of external devices such as routers, switches, and servers. Alternatively or additionally, multiple external receiving devices 120 can simultaneously access different optical signals by connecting to different ports 122 on the faceplate 116. Such capability is facilitated by the wavelength and/or polarization -specific nature of the demultiplexing process, which isolates and routes each optical signal 110 to its respective optical output port 122. For instance, with reference again to FIG. 1F, an external router R1 may connect to a first port 108-1 to access the data stream corresponding to wavelength λ1 (signal S₁), while another server R2 connects to a second port 108-2 to access the data stream associated with wavelength λ2 (signal S₂).

As such, embodiments of the disclosure increase the number of available receiving interfaces (e.g., receiving optical fibers 122 or ports 108) to meet the growing demands of large compute clusters without increasing the physical footprint of the network device. By minimizing the number of transmitting optical connectors/fibers 114 and optimizing space within the chassis housing the optical assembly, embodiments of the disclosure enable the support of more connections and higher data throughput within a compact and efficient design in which the number of transmitting optical fibers 114 (e.g., optical fiber exiting the optical module 104) is less than the number of receiving optical fibers 122 (e.g., optical fibers exiting the optical coupler 106 or optical assembly) or optical output ports 108.

FIG. 1B illustrates an example system 100B for transmitting optical signals via an array of lasers. When using an array of lasers 102A, each laser may be specifically tuned to generate a light beam at a particular wavelength, polarization, or wavelength-polarization combination. For instance, a first wavelength λ1, may be generated by a first laser, a second wavelength λ2 may be generated by a second laser, and so on, with each laser within the array 102 generating a light beam. The light beams from each laser may then be combined to form a composite light beam via an integrated multiplexer 104C. The composite light beam produced by the multiplexer 104C may be directed to and used by the optical module 104. In some embodiments, this combining process can occur at the light source 102A itself, where an integrated multiplexer 104C within the light source may consolidate the various light beams into a single composite output.

As shown in FIG. 1B, devices such as beam splitters or optical power splitters 104A can be employed within the optical module 104 to split an incoming light beam into multiple portions. The optical power splitter 104A may ensure that the light beam is divided into its constituent portions while maintaining the integrity of each wavelength. The power splitter 104A may have various parameters, such as a splitting ratio that determines how the light beam is divided among the output ports or transmitters 104B, a wavelength range that determines the range of wavelengths over which the power splitter may operate, polarization dependence, power handling capacity, and/or the like, each of which can be adjusted to optimize the performance of the optical module 104 based on specific operational requirements. Alternatively, each signal can be outputted on a separate fiber.

In another instance, where the light source is embodied as an array of lasers 102A but the number of light sources does not match the number of transmitters 104B, power splitters (e.g., power splitter 104A) can be used to distribute the light beams. These power splitters can divide the light from each source into multiple portions, ensuring that all transmitters (e.g., transmitters 104B) receive the necessary optical signals. After division, the light beams may be combined via an integrated multiplexer 104C within the optical module 104. Other components shown in the embodiment depicted in FIG. 1B may be configured similarly to the corresponding components shown in FIG. 1A and described above.

FIG 1C illustrates an example system for transmitting optical signals 110 using a plurality of wavelengths 100C. As shown in FIG. 1C, the combining of the light beams may take place at the optical module 104, utilizing internal optical components designed to merge the beams efficiently. Additionally, a standalone module equipped with multiplexing capabilities can be employed to combine the light beams before they are fed into the optical module 104.

Once the light beams are passed to the transmitters 104B within the optical module 104, each transmitter 104B may modulate the optical signal 110 at its assigned wavelength (e.g., λ1, λ2, ..., λ16), polarization, or wavelength-polarization combination, embedding the distinct data streams into the light beams. The modulated optical signals 110 may then be multiplexed via the integrated multiplexer 104C, where they may be combined for transmission through a single optical fiber (e.g., optical fiber 114). In this regard, the optical module 104 may include an integrated multiplexer 104C or other suitable means configured to combine the modulated optical signals 110 into the single optical fiber. The resulting multiplexed signal S_{M} may contain all the individual data streams, each occupying a distinct wavelength (e.g., λ1, λ2, ..., λ16), polarization, or wavelength-polarization combination within the optical spectrum.

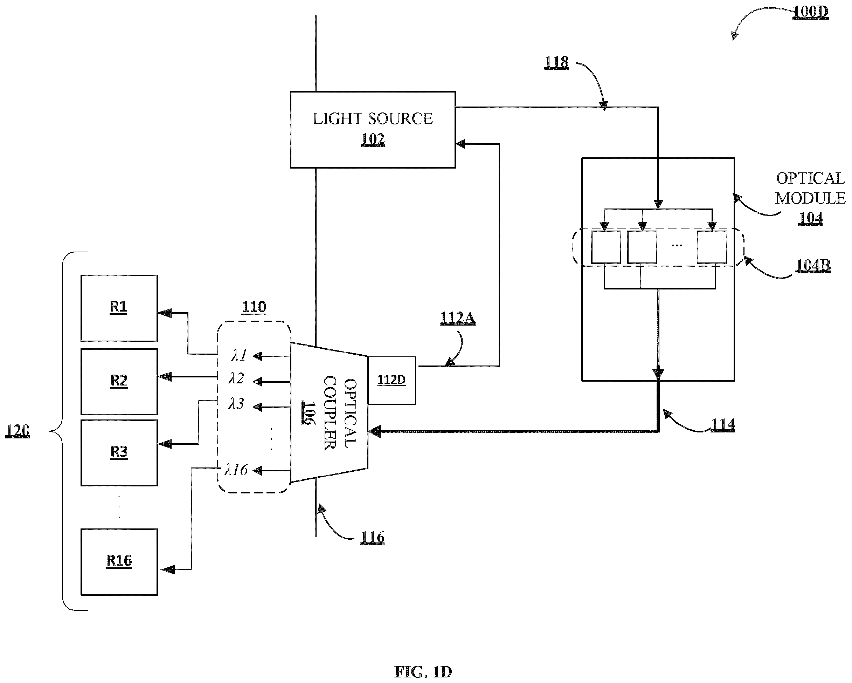

FIG. 1D illustrates a system 100D for transmitting optical signals with a sense line coupled between a light source 102 and the optical coupler 106. As illustrated in FIG. 1D, the optical coupler 106 may provide real-time or near real-time feedback to the light source 102 in the form of a feedback signal 112A to communicate an operational status and any practical effects arising during the implementation of the system, such as thermal variations and other environmental factors. In this regard, the optical coupler 106 may include a sensor device 112D operably coupled thereto or integrated therein that monitors these conditions. The sensor device 112D can detect various parameters such as temperature, signal strength, and wavelength stability, and relay this information back to the light source 102. By continuously monitoring these factors, the sensor device 112D enables the system to dynamically adjust its operation to maintain optimal performance.

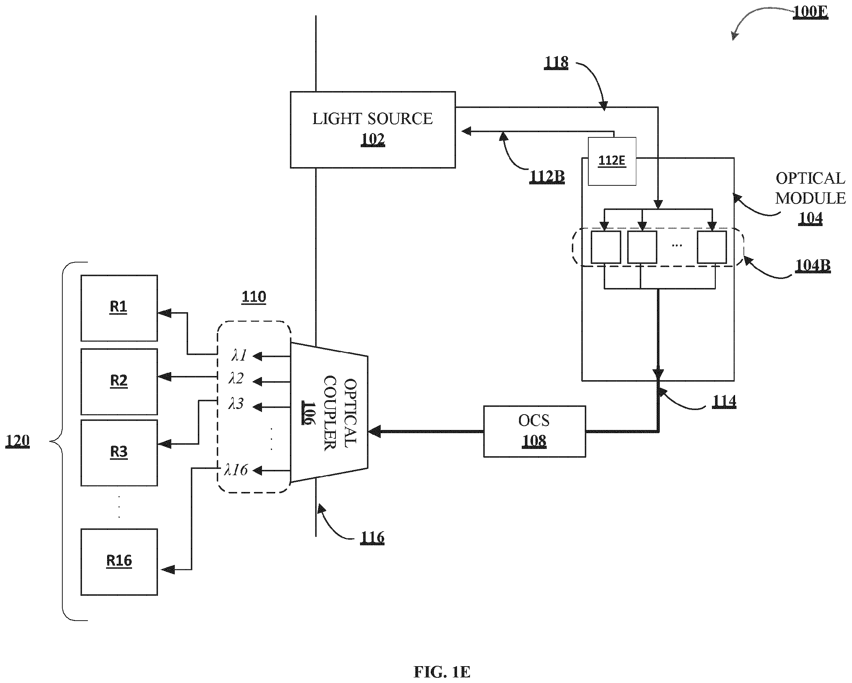

FIG. 1E illustrates a system 100E for transmitting optical signals with a sense line coupled between the light source 102 and the optical module 104. As illustrated in FIG. 1E, the optical module 104 may provide real-time or near real-time feedback to the light source 102 in the form of a feedback signal 112B to communicate performance metrics and signal integrity information, such as signal strength, modulation accuracy, and any detected anomalies that may affect the quality of the transmitted signals. In this regard, the optical module 104 may include a sensor device 112E operably coupled thereto or integrated therein that monitors these performance metrics. The sensor device 112E can detect and measure various parameters, including but not limited to, signal strength, modulation accuracy, and wavelength alignment. This information may then be relayed back to the light source 102, enabling the light source 102 to dynamically adjust its output to maintain optimal signal quality. By incorporating such a sensor device 112B, the optical module 104 may enable continuous monitoring and adjustment.

In some embodiments of the system 100A-100E or optical assembly 1000, an optical circuit switch (OCS) 108 may be operably coupled between the optical module 104 and the optical coupler 106. The OCS 108 may dynamically manage and route the optical signals 110 transmitted from the optical module 104 to the optical coupler 106. By incorporating the OCS 108, the optical paths may be reconfigurable in real-time based on network demands, operational conditions, fault scenarios, and/or the like, allowing for efficient utilization of the available optical resources. An OCS 108 may be operably coupled to a plurality of optical fibers 114. For instance, any of the optical signal transmission systems described herein in FIGS. 1A-1F may be configured to incorporate the OCS 108.

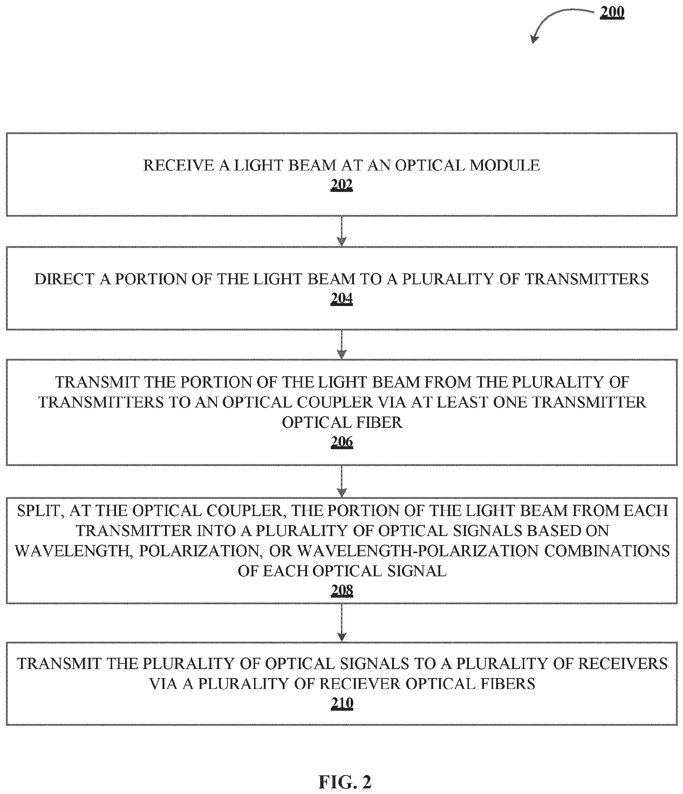

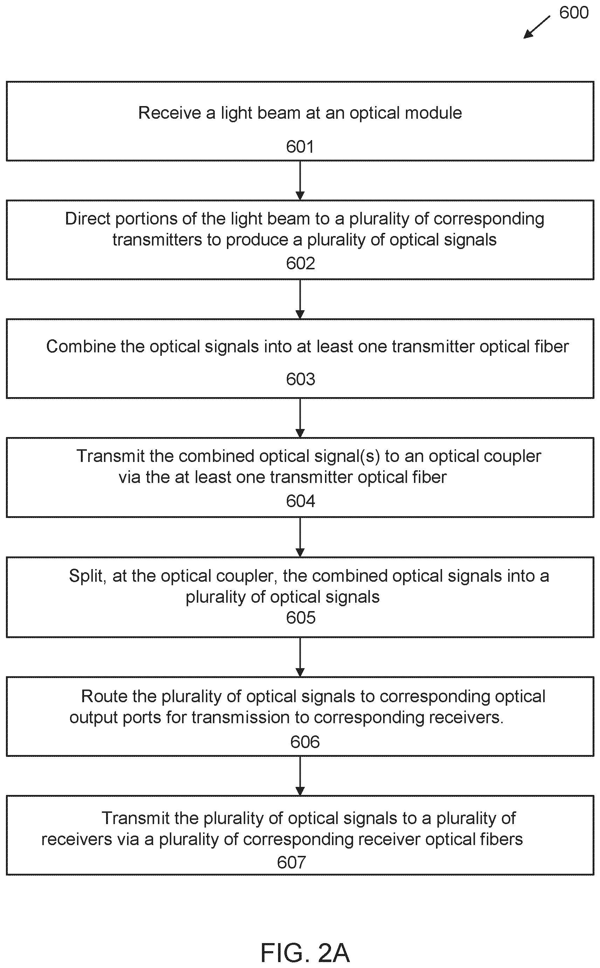

FIG. 2 illustrates a method 200 for transmitting optical signals, in accordance with an embodiment of the disclosure. The method 600 may be implemented using any of the optical assemblies 1000 and/or the systems 100A-100E described above. The method may comprise receiving a light beam at an optical module (Block 202). The received light beam may be generated by a light source (e.g., a comb-laser or array of lasers as described previously) and transmitted to the optical module via an optical fiber connection. The optical module may then produce a plurality of optical signals using the light beam. The method may comprise directing a portion of the light beam to a transmitter (Block 204). The method may further include transmitting the portion of the light beam from the transmitter to an optical coupler via a single transmitter optical fiber (Block 206). The method may further include splitting, at the optical coupler, the portion of the light beam from each transmitter into a plurality of optical signals based on wavelength, polarization, or wavelength-polarization combinations of each signal (Block 208). The method may further include transmitting the plurality of optical signals to a plurality of receivers via a plurality of receiver optical fibers (Block 210). Each of the plurality of receiver optical fibers may be independently routable from the optical coupler to a corresponding receiver, as described above. Moreover, the number of transmitter optical fibers between the transmitters of the optical module and the optical coupler may be less than the number of receiver optical fibers between the optical coupler to the corresponding receivers (e.g., the receivers at the external destinations).
FIG. 2A illustrates a method 600 for transmitting optical signals, in accordance with another embodiment of the disclosure. The method 600 may be implemented using any of the optical assemblies 1000 and/or the systems 100A-100E described above. The method 600 comprises receiving (at block 601) a light beam at an optical module 104. The light beam may comprise a plurality of different wavelengths, polarizations, and/or wavelength-polarization combinations. Preferably, the optical module 104 is configured to produce a plurality of (modulated) optical signals using the light beam. The method 600 further comprises directing (at block 602) portions of the light beam to a plurality of corresponding transmitters 104B to produce a plurality of (modulated) optical signals. Directing may comprise using a power splitter to split the light beam into multiple portions such that each portion of the light beam from the power splitter is directed to a corresponding transmitter 104B. Preferably, producing the optical signals 110 comprises individually modulating, using the transmitters 104B, a particular wavelength, polarization, or wavelength- polarization combination of each portion of the light beam with a separate data stream, to thereby produce (modulated) optical signals 110 that encode distinct information onto different wavelengths (e.g., λ1, λ2, ..., λ16), polarizations, or wavelength-polarization combinations. The method 600 further comprises combining (at block 603) the plurality of optical signals into at least one transmitter optical fiber 114, e.g. using a multiplexer, and transmitting (at block 604) the combined optical signal(s) S_{M} to an optical coupler 106 via the at least one transmitter optical fiber 114. The method 600 further comprises splitting (at block 605), at the optical coupler 106, the combined optical signal(s) S_{M} into a plurality of optical signals 110 based on a wavelength, a polarization, or wavelength- polarization combinations of each optical signal 110. Splitting may comprise using a demultiplexer. The method 600 further comprises routing (at block 606) the plurality of optical signals 110 to corresponding optical output ports 108 for transmission to corresponding receivers via a plurality of receiver optical fibers. The method 600 may further comprise transmitting (at block 607) the plurality of optical signals 110 to a plurality of receivers 120 via a plurality of corresponding receiver optical fibers 122. As described above, the number of transmitter optical fibers 114 is less than the number of optical output ports 108 and receiver optical fibers 122.
Alternatively, instead of routing the plurality of optical signals to corresponding optical output ports, the method may comprise coupling the plurality of optical signals into corresponding receiver optical fibers for transmission to corresponding receivers 120.

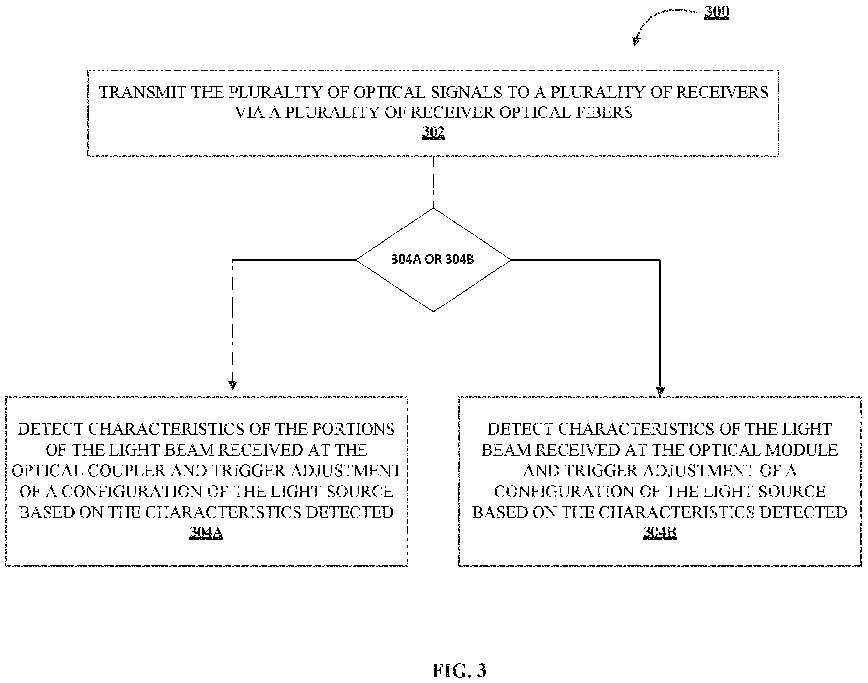

FIG. 3 illustrates a method 300 for dynamically adjusting the characteristics of the light source, in accordance with an embodiment of the disclosure. In some embodiments, the method may include detecting characteristics of the portions of the light beam received at the optical coupler and triggering adjustment of the configuration of the light source based on the detected characteristics (Block 304A). As described in connection with FIG. 1D, detecting characteristics of the portions of the light beam may involve operably coupling a sensor device (e.g., the sensor device 112D in FIG. 1D) to the optical coupler. The sensor device may be connected to one end of a feedback or sense line (e.g., the sense line 112A in FIG. 1D), while the light source is connected to the opposite end of the feedback or sense line. As characteristics of the light beam are detected by the sensor at the optical coupler, the sensor device may emit a trigger (e.g., a feedback signal) through the feedback or sense line to the light source. The configuration of the light source may then be adjusted based on the received feedback signal to modify a quality or characteristic of the emitted light.

Additionally or alternatively, in some embodiments, the method 300 may include detecting characteristics of the light beam received at the optical module and triggering an adjustment of the configuration of the light source based on the detected characteristics (Block 304B). As described in connection with FIG. 1E, detecting characteristics of the portions of the light beam may involve operably coupling a sensor device (e.g., the sensor device 112E in FIG. 1E) to the optical module. The sensor device may be connected to one end of a feedback or sense line (e.g., the sense line 112B in FIG. 1E), while the light source is connected to the opposite end of the feedback or sense line. As characteristics of the light beam are detected by the sensor at the optical module, the sensor device may emit a trigger (e.g., a feedback signal) through the feedback or sense line to the light source. The configuration of the light source may then be adjusted based on the received feedback signal to modify a quality or characteristic of the emitted light.

As will be appreciated by one of ordinary skill in the art in view of the present disclosure, such systems, methods, and optical assemblies may be configured to operably interact with, implemented in and/or function in conjunction with one or more systems. For instance, the system as described may be implemented in and/or operating in conjunction with systems configured to perform a plurality of operations including but not limited to: simulation operations, simulation operations to test or validate autonomous machine applications, digital twin operations, light transport simulations, deep learning, generative artificial intelligence (AI operations using a large language model (LLM), hardware testing using simulation, and generative operations using a language model (LM). Simulation operations may refer to computational models which may include but are not limited to predicting performance, behavior, outcomes, and/or conditions of systems. Systems performing simulation operations may further be implemented in testing, validating, measuring, and/or further enhancing autonomous machine applications. Digital twin operations may comprise creation of digital models, reconstructions, and/or duplications of an input. Light transport systems may comprise tests, models, plans, and/or estimations of light movements within a system. A deep learning system may comprise training, classifying, and/or identifying convolutional neural networks. Systems described herein may further be operably coupled to systems performing generative AI operations using LLM, including but not limited to large language models configured to produce contextually relevant response in natural language text, speech, or conversations.

In some embodiments, as will be appreciated by one of ordinary skill in the art in view of the present disclosure, such systems, methods, and optical assemblies may be configured to operably interact with, implemented in, and/or function in conjunction with one or more systems generating or presenting virtual reality (VR) content, generating or presenting augmented reality (AR) content, and/or generating or presenting mixed reality content. Further systems that may be configured to operably interact with, be implemented in, and/or function in conjunction with one or more systems including but not limited to a system for rendering graphical output, a system implemented using an edge device, a system incorporating one or more virtual machines (VMs), a system implemented at least partially in a data center, a system for synthetic data generation, a system for synthetic data generation, a collaborative content creation platform for 3D assets, and/or a system implemented at least partially using cloud computing resources.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of any optical component or optoelectronic element. In addition, the methods described above may include fewer steps in some cases, while in other cases may include additional steps. The steps and modifications to the steps of the method described above, in some cases, may be performed in any order and in any combination.

Therefore, it is to be understood that the disclosure is not to be limited to the specific embodiments disclosed herein and that modifications and other embodiments are intended to be included within the scope of the appended claims. Although specific terms are employed herein, they are used in a generic and descriptive sense only and not for purposes of limitation.

The disclosure of this application also includes the following numbered clauses.

Clause 1. An optical assembly, comprising: an optical module configured to receive a light beam, wherein the optical module is configured to produce a plurality of optical signals using the light beam, wherein the optical module comprises a plurality of transmitters, and wherein a portion of the light beam is directed to a corresponding transmitter; and an optical coupler operably coupled to each of the plurality of transmitters via at least one transmitter optical fiber, wherein the optical coupler is configured to split the portion of the light beam from each transmitter into a plurality of optical signals based on wavelength, polarization, or wavelength-polarization combinations of each optical signal for transmission to a corresponding receiver via a plurality of receiver optical fibers, wherein each of the plurality of receiver optical fibers is independently routable from the optical coupler to the corresponding receiver, and wherein the number of transmitter optical fibers connecting the plurality of transmitters of the optical module to the optical coupler is less than the number of receiver optical fibers connecting the optical coupler to the corresponding receivers.

Clause 2. The optical assembly of clause 1, wherein the optical module further comprises a power splitter operably coupled to the plurality of transmitters, wherein the power splitter is configured to split the light beam into multiple portions such that each portion of the light beam from the power splitter is directed to the corresponding transmitter.

Clause 3. The optical assembly of clause 1, wherein a ratio of receiver optical fibers to transmitter optical fibers is 16:1.

Clause 4. The optical assembly of clause 1, wherein the optical coupler comprises a demultiplexer (DMUX).

Clause 5. The optical assembly of clause 1, wherein the optical module is a co-packaged optics (CPO) module.

Clause 6. The optical assembly of clause 1, wherein the optical module further comprises a sense line operably coupling a light source and the optical coupler, wherein the sense line is configured to detect characteristics of the portions of the light beam received at the optical coupler such that a configuration of the light source is adjusted based on the characteristics detected.

Clause 7. The optical assembly of clause 1, wherein the optical module further comprises a sensor configured to detect characteristics of the portions of the light beam at the optical module and a sense line operably coupled to the sensor and a light source, wherein the sense line is configured to relay an indication of the detected characteristics to the light source such that a configuration of the light source is adjusted based on the detected characteristics.

Clause 8. A system comprising: a light source configured to generate a light beam comprising a plurality of wavelengths, a plurality of polarizations, or a plurality of wavelength-polarization combinations, an optical module operably coupled to the light source, wherein the optical module is configured to produce a plurality of optical signals using the light beam, wherein the optical module comprises a plurality of transmitters, wherein a portion of the light beam is directed to a corresponding transmitter; and an optical coupler operably coupled to each of the plurality of transmitters via at least one transmitter optical fiber, wherein the optical coupler is configured to split the portion of the light beam from each transmitter into a plurality of optical signals based on wavelength, polarization, or wavelength-polarization combinations of each optical signal for transmission to a corresponding receiver via a plurality of receiver optical fibers, wherein each of the plurality of receiver optical fibers is independently routable from the optical coupler to the corresponding receiver, and wherein the number of transmitter optical fibers connecting the plurality of transmitters of the optical module to the optical coupler is less than the number of receiver optical fibers connecting the optical coupler to the corresponding receivers.

Clause 9. The system of clause 8, wherein the optical module further comprises a power splitter operably coupled to the plurality of transmitters, wherein the power splitter is configured to split the light beam into multiple portions such that each portion of the light beam from the power splitter is directed to the corresponding transmitter.

Clause 10. The system of clause 8, further comprising an optical circuit switch (OCS) operably coupled between the plurality of transmitters of the optical module and the optical coupler.

Clause 11. The system of clause 8, wherein the system further comprises a sensor configured to detect characteristics of the portions of the light beam received at the optical coupler and a sense line operably coupled to the sensor and the light source, wherein the sense line is configured to relay an indication of the detected characteristics to the light source such that a configuration of the light source is adjusted based on the detected characteristics.

Clause 12. The system of clause 8, wherein the system further comprises a sensor configured to detect characteristics of the portions of the light beam at the optical module and a sense line operably coupled to the sensor and the light source, wherein the sense line is configured to relay an indication of the detected characteristics to the light source such that a configuration of the light source is adjusted based on the detected characteristics.

Clause 13. The system of clause 8, wherein the light source comprises an array of lasers, wherein each laser is configured to generate a respective light beam comprising at least one wavelength.

Clause 14. The system of clause 8, wherein the light source is external to the optical module.

Clause 15. The system of clause 8, wherein a ratio of receiver optical fibers to transmitter optical fibers is 16:1.

Clause 16. The system of clause 8, wherein the optical coupler comprises a demultiplexer (DMUX).

Clause 17. The system of clause 8, wherein the optical module is a co-packaged optics (CPO) module.

Clause 18. The system of clause 8, wherein the system is configured to operably interact with at least one of: a system for performing simulation operations; a system for performing simulation operations to test or validate autonomous machine applications; a system for performing digital twin operations; a system for performing light transport simulation; a system for rendering graphical output; a system for performing deep learning operations; a system for performing generative AI operations using a large language model (LLM); a system implemented using an edge device; a system for generating or presenting virtual reality (VR) content; a system for generating or presenting augmented reality (AR) content; a system for generating or presenting mixed reality (MR) content; a system incorporating one or more Virtual Machines (VMs); a system implemented at least partially in a data center; a system for performing hardware testing using simulation; a system for performing generative operations using a language model (LM); a system for synthetic data generation; a collaborative content creation platform for 3D assets; or a system implemented at least partially using cloud computing resources.

Clause 19. A method comprising: receiving a light beam at an optical module, wherein the optical module is configured to produce a plurality of optical signals using the light beam; directing a portion of the light beam to a plurality of transmitters; transmitting the portion of the light beam from the plurality of transmitters to an optical coupler via at least one transmitter optical fiber; splitting, at the optical coupler, the portion of the light beam from each transmitter into a plurality of optical signals based on wavelength, polarization, or wavelength- polarization combinations of each optical signal; and transmitting the plurality of optical signals to a plurality of receivers via a plurality of receiver optical fibers, wherein each of the plurality of receiver optical fibers is independently routable from the optical coupler to a corresponding receiver, and wherein the number of transmitter optical fibers connecting the transmitter of the optical module to the optical coupler is less than the number of receiver optical fibers connecting the optical coupler to the corresponding receivers.

**Clause** 20. The method of clause 19 further comprising detecting characteristics of the portions of the light beam received at the optical coupler and triggering adjustment of a configuration of a light source based on the characteristics detected.

Clause 21. The method of clause 19 further comprising detecting characteristics of the light beam received at the optical module and triggering adjustment of a configuration of a light source based on the characteristics detected.

It will be understood that aspects and embodiments are described above purely by way of example, and that modifications of detail can be made within the scope of the claims. Each feature disclosed in the description, and (where appropriate) the claims and drawings may be provided independently or in any appropriate combination. Reference numerals appearing in the claims are by way of illustration only and shall have no limiting effect on the scope of the claims.

## Claims

1. An optical assembly, comprising:
an optical module comprising a plurality of transmitters;
at least one transmitter optical fiber;
an optical coupler operably coupled to the optical module via the at least one transmitter optical fiber; and
a plurality of optical output ports coupleable to corresponding receiver optical fibers;
wherein the optical module is configured to receive a light beam, direct portions of the light beam to corresponding transmitters of the plurality of transmitters to produce a plurality of optical signals from the light beam, and combine the plurality of optical signals into the at least one transmitter optical fiber;
wherein the optical coupler is configured to split the combined optical signals into a plurality of optical signals based on a wavelength, a polarization, or wavelength-polarization combinations of each optical signal, and route the plurality of optical signals to corresponding optical output ports for transmission to corresponding receivers via a plurality of receiver optical fibers, and
wherein the number of transmitter optical fibers is less than the number of optical output ports.

2. The optical assembly of claim 1, wherein the optical module further comprises a power splitter operably coupled to the plurality of transmitters, wherein the power splitter is configured to split the light beam into multiple portions such that each portion of the light beam from the power splitter is directed to the corresponding transmitter.

3. The optical assembly of claim 1 or 2, wherein a ratio of optical output ports to transmitter optical fibers is 16:1.

4. The optical assembly of any preceding claim, wherein the optical coupler comprises a demultiplexer (DMUX).

5. The optical assembly of any preceding claim, wherein the optical module is a co-packaged optics (CPO) module.

6. The optical assembly of any preceding claim, further comprising an optical circuit switch (OCS) operably coupled between the plurality of transmitters of the optical module and the optical coupler.

7. The optical assembly of any preceding claim, wherein the optical module further comprises a sense line operably coupling a light source and the optical coupler, wherein the sense line is configured to detect characteristics of light received at the optical coupler such that a configuration of the light source is adjusted based on the characteristics detected.

8. The optical assembly of any preceding claim, wherein the optical module further comprises a sensor configured to detect characteristics of the portions of the light beam at the optical module and a sense line operably coupled to the sensor and a light source, wherein the sense line is configured to relay an indication of the detected characteristics to the light source such that a configuration of the light source is adjusted based on the detected characteristics.

9. The optical assembly of any preceding claim, wherein the optical output ports are provided in a faceplate of a chassis that houses the optical assembly.

10. A system comprising:
a light source configured to generate a light beam comprising a plurality of different wavelengths, polarizations, and/or wavelength-polarization combinations; and
an optical assembly according to any of claims 1 to 9, wherein the optical module of the optical assembly comprises, or is operably coupled to, the light source.

11. The system of claim 10, wherein the light source comprises an array of lasers, wherein each laser is configured to generate a respective light beam comprising at least one wavelength.

12. The system of claim 10 or 11, wherein the light source is external to the optical module of the optical assembly; and/or
wherein the optical module of the optical assembly comprises an integrated light source configured to generate a light beam comprising a plurality of wavelengths, a plurality of polarizations, or a plurality of wavelength-polarization combinations.

13. The system of claim 10, 11, or 12, further comprising a plurality of receiver optical fibers coupleable to the optical output ports, wherein each of the plurality of receiver optical fibers is independently routable from the optical output ports to a corresponding receiver.

14. The system of any of claims 10 to 13, wherein the system is configured to operably interact with at least one of:
a system for performing simulation operations;
a system for performing simulation operations to test or validate autonomous machine applications;
a system for performing digital twin operations;
a system for performing light transport simulation;
a system for rendering graphical output;
a system for performing deep learning operations;
a system for performing generative AI operations using a large language model (LLM);
a system implemented using an edge device;
a system for generating or presenting virtual reality (VR) content;
a system for generating or presenting augmented reality (AR) content;
a system for generating or presenting mixed reality (MR) content;
a system incorporating one or more Virtual Machines (VMs);
a system implemented at least partially in a data center;
a system for performing hardware testing using simulation;
a system for performing generative operations using a language model (LM);
a system for synthetic data generation;
a collaborative content creation platform for 3D assets; or
a system implemented at least partially using cloud computing resources.

15. A method comprising:
receiving a light beam at an optical module of an optical assembly;
directing portions of the light beam to a plurality of corresponding transmitters of the optical module to produce a plurality of optical signals;
combining the plurality of optical signals into at least one transmitter optical fiber;
transmitting the combined optical signal(s) to an optical coupler via the at least one transmitter optical fiber;
splitting, at the optical coupler, the combined optical signals into a plurality of optical signals based on wavelength, polarization, or wavelength- polarization combinations of each optical signal; and
routing the plurality of optical signals to corresponding optical output ports of the optical assembly for transmission to corresponding receivers via a plurality of receiver optical fibers;
wherein the number of transmitter optical fibers is less than the number of optical output ports; and, optionally or preferably, further comprising:
transmitting the plurality of optical signals to a plurality of receivers via a plurality of corresponding receiver optical fibers, wherein each of the plurality of receiver optical fibers is independently routable from the optical coupler to a corresponding receiver.
